# EUROPÄISCHE PATENTSCHRIFT

(11) **EP 4 504 581 B1**
(45) Veröffentlichungstag und Bekanntmachung des Hinweises auf die Patenterteilung: **18.02.2026**
(21) Anmeldenummer: 23716510.5
(22) Anmeldetag: 31.03.2023
(51) Int. Cl.: B62M 3/08

(54) **PEDAL MIT EINER PEDALACHSE, EINEM DARAUF MONTIERTEN LAGER, UND EINEM SICHERUNGSELEMENT**
PEDAL WITH A PEDAL AXLE, A BEARING MOUNTED THEREON, AND A SECURING ELEMENT
PÉDALE AVEC UN AXE DE PÉDALE, UN PALIER MONTÉ SUR CELLE-CI ET UN ÉLÉMENT DE FIXATION

(30) Priorität: 06.04.2022 DE 102022203453
(43) Veröffentlichungstag der Anmeldung: 12.02.2025
(73) Patentinhaber: Sport Import GmbH, 26188 Edewecht (DE)
(72) Erfinder: LAUER, Swen, 82467 Garmisch-Partenkirchen (DE)
(74) Vertreter: Fischer, Florian
(86) Internationale Anmeldenummer: PCT/EP2023/058553
(87) Internationale Veröffentlichungsnummer: WO 2023/194254

(56) Entgegenhaltungen:
- EP-A1- 3 972 892
- EP-B1- 3 972 892
- CN-A- 108 341 018
- US-A1- 2015 298 762

## Beschreibung

Das hierin beschriebene innovative Konzept betrifft ein Pedal, insbesondere für Fahrräder. Das Pedal weist erfindungsgemäß eine Pedalachse auf, auf der ein Lager montiert ist, sodass die Pedalachse und das Lager gemeinsam eine Montageeinheit bilden, die in den Pedalkörper einsetzbar beziehungsweise aus dem Pedalkörper entnehmbar ist. Die Montageeinheit aus Lager und Achse ist mit einem Sicherungselement gegen ein Herausfallen aus dem Pedalkörper gesichert, wobei dieses Sicherungselement von außen zugänglich ist.

Pedale werden für Gewöhnlich bei Fahrzeugen eingesetzt, die mittels einer Tretkurbel angetrieben werden, d.h. die Antriebskraft wird über die Tretkurbel mittels eines Kettentriebs, eines Riementriebs oder dergleichen auf das angetriebene Rad bzw. die angetriebenen Räder übertragen. Die Pedale dienen dazu, um dem Fahrer die Kraftübertragung auf die Tretkurbel zu ermöglichen und ihm dabei einen sicheren Stand zu ermöglichen.

Diese Form des Antriebs findet insbesondere bei Zweirädern Verwendung. Hierzu zählen unmotorisierte Fahrräder sowie Fahrräder mit Motorunterstützung, wie zum Beispiel sogenannte Pedelecs oder E-Bikes. Aber auch mehrspurige Fahrzeuge, wie z.B. Dreiräder oder Vierräder, sind teilweise mit Kurbeltrieb ausgestattet.

Die Pedale werden in die Kurbel eingeschraubt. Hierfür weisen die Pedale eine Achse auf, die fahrzeugseitig ein Gewinde aufweist mittels dem das Pedal in ein entsprechendes Gegengewinde in der Kurbel eingeschraubt wird. Der Pedalkörper ist drehbar auf dieser Achse gelagert, sodass sich das Pedal bei einer Drehung der Kurbel stets in der Horizontalen befindet, um dem Fahrer eine horizontale Trittfläche zu bieten und so ein kontinuierliches Treten zu ermöglichen.

Gelegentlich muss die Pedalachse aus dem Pedalkörper entfernt werden, z.B. zu Wartungszwecken. Es gibt im Wesentlichen zwei unterschiedliche Bauformen von Pedalen, die sich wie folgt voneinander unterscheiden:
Eine erste Bauform sieht vor, dass der Pedalkörper einen Hohlraum aufweist, in dem die Pedalachse angeordnet ist. Dieser Hohlraum erstreckt sich komplett durch das Pedal hindurch, d.h. der Pedalkörper weist an zwei gegenüberliegenden Enden je eine Öffnung auf, wobei sich der Hohlraum zwischen diesen beiden Öffnungen erstreckt, wie zum Beispiel gezeigt in EP3972892A1. Die Pedalachse wird nun auf einer Seite, sprich durch eine der beiden Öffnungen, in den Pedalkörper eingesetzt, sodass sich die Pedalachse innerhalb des Hohlraums durch den Pedalkörper hindurch erstreckt. An mindestens einer der Öffnungen, und vorzugsweise an beiden Öffnungen, ist jeweils ein Lager, in der Regel ein Radialkugellager, angeordnet. Die Lager werden dabei für Gewöhnlich in die Bohrungen bzw. Öffnungen des Pedalkörpers eingepresst. Beim Einsetzen der Pedalachse in den Pedalkörper wird die Pedalachse durch die jeweiligen Lager hindurchgesteckt, sodass die Pedalachse in den Lagern gelagert ist. Die durchgeführte Pedalachse wird dann auf der austrittsseitigen Öffnung fixiert, meist mit einer Mutter. Anschließend wird die austrittsseitige Öffnung mit einer Staubschutzkappe abgedeckt, um das Eindringen von Staub, Schmutz und Feuchtigkeit zu vermeiden.

In manchen Situationen, beispielsweise zum Zwecke der Wartung von Pedalachse und Lager, werden die Pedalachse und die Lager aus dem Pedalkörper herausgenommen. Dies gestaltet sich jedoch insbesondere bei den Lagern oft problematisch, und die Lager können häufig nicht zerstörungsfrei aus dem Pedalkörper entfernt werden. Zuerst muss hierbei die Staubschutzkappe aus dem Pedalkörper herausgenommen werden. Dann muss die Mutter gelöst werden, um die Pedalachse anschließend aus dem Pedalkörper herausziehen zu können. Da das Lager im Pedalkörper eingepresst ist, bleibt dieses zunächst weiterhin im Pedalkörper. Um das Lager zu entfernen, muss von der gegenüberliegenden Seite, sprich von der Seite, von der die Pedalachse in den Pedalkörper eingeführt wird, ein länglicher Gegenstand durch den gesamten Hohlraum, d.h. durch den kompletten Pedalkörper, hindurchgeschoben werden, um an das Lager zu gelangen und dieses dann herausschlagen zu können. Dabei wird das Lager häufig zerstört. Es muss dann also ein neues Lager in den Pedalkörper eingepresst werden. Hinzu kommt, dass ein auch auf der gegenüberliegenden Seite des Pedalkörpers ein zweites Lager eingepresst sein kann. Auch dieses muss, wie zuvor beschrieben, herausgeschlagen werden, wobei das Lager oft zerstört wird. Dies ist jedoch nicht besonders anwenderfreundlich und schreckt daher viele Nutzer davon ab, regelmäßig ihre Pedale zu warten.

Es ist auch eine zweite Bauform von Pedalen bekannt. Hier weist der Pedalkörper lediglich am fahrzeugseitigen Pedalbereich eine Öffnung auf, in die ein einzelnes Lager eingepresst ist. Im Vergleich zur oben beschriebenen ersten Bauform ist hier keine Pedalachse vorhanden, die sich innerhalb eines Hohlraums durch den gesamten Pedalkörper hindurch erstreckt. Stattdessen steckt eine Art Stummelachse in dem Einzellager. Da nur dieses einzelne Lager vorhanden ist, muss die gesamte Kraft von diesem einzelnen Lager aufgenommen werden. Dies hat zur Folge, dass dieses Einzellager deutlich größer ausfallen muss als die in der oben beschriebenen ersten Pedalbauform einsetzbaren Kugellager. Das Einzellager ist sogar derart groß, dass es deutlich über die beiden Standflächen des Pedals hinausragt. Somit erhält man keine durchgehend ebenen Standflächen mehr, was für manche Fahrer durchaus störend wirken kann. Anders ausgedrückt, weist das Pedal am fahrzeugseitigen Pedalbereich, aufgrund des großen Lagers, eine Erhebung in Form eines Knubbels auf, die beidseitig über die ansonsten gleichmäßig ebenen Standflächen des Pedals hinausragt. Hinzu kommt auch bei dieser Bauform, dass das in den Pedalkörper eingepresste Lager nahezu nicht zerstörungsfrei entnommen werden kann. Im Vergleich zur ersten Bauform ist es sogar noch schwieriger das Lager zu entfernen, da es aufgrund des fehlenden durchgängigen Hohlraums im Pedalkörper, nicht von der Gegenseite aus ausgetrieben werden kann.

Es wäre daher wünschenswert, bestehende Pedale dahingehend zu verbessern, dass diese auf einfache Art und Weise demontierbar sind, d.h. dass die einzelnen Bestandteile eines Pedals, insbesondere die Pedalachse und die ein oder mehreren Lager, einfach aus dem Pedalkörper entnehmbar sind. Ferner wäre es wünschenswert, dass hierbei trotzdem durchgehend ebene Standflächen des Pedals, ohne störende Erhebungen, realisiert werden können.

Dies wird erreicht durch ein Pedal mit den Merkmalen gemäß Anspruch 1. Weitere Ausführungsformen und vorteilhafte Aspekte dieses Pedals sind in den jeweils abhängigen Patentansprüchen genannt.

Das erfindungsgemäße Pedal weist einen Pedalkörper und eine Pedalachse auf. Der Pedalkörper weist eine Einführöffnung auf, durch die die Pedalachse in den Pedalkörper eingeführt werden kann. Diese Einführöffnung befindet sich auf der Seite des Pedals, die im eingebauten Zustand der Tretkurbel bzw. dem Fahrzeug (z.B. Fahrrad) zugewandt ist. In dem Pedalkörper ist ein Hohlraum ausgebildet, der sich, von der Einführöffnung ausgehend, in den Pedalkörper hinein bzw. ein Stück weit durch den Pedalkörper hindurch erstreckt. Vorzugsweise kann sich der Hohlraum hierbei unvollständig durch den Pedalkörper hindurch erstrecken, d.h. der Hohlraum erstreckt sich nicht vollständig, d.h. von der Einführöffnung bis zu einem gegenüberliegenden Ende des Pedalkörpers, durch den Pedalkörper hindurch. Die Pedalachse, die durch die Einführöffnung in den Pedalkörper eingeführt wird, erstreckt sich innerhalb des Hohlraums zumindest abschnittsweise durch den Pedalkörper hindurch. Vorzugsweise kann sich auch die Pedalachse hierbei nur unvollständig durch den Pedalkörper, d.h. nicht komplett durch den gesamten Pedalkörper, hindurch erstrecken. Auf der Pedalachse ist ein Lager angeordnet, das ausgestaltet ist, um den Pedalkörper drehbar auf der Pedalachse zu lagern. Hierbei kann es sich beispielsweise um ein Gleitlager oder um ein Kugellager handeln. Es können auch mehrere Lager auf der Pedalachse angeordnet sein. Beispielsweise kann ein erstes Lager an einem hinteren Ende der Pedalachse vorgesehen sein, d.h. an einem hinteren Achsabschnitt, der sich in der Nähe der Einführöffnung befindet. Alternativ oder zusätzlich kann ein Lager an einem vorderen Ende der Pedalachse vorgesehen sein, d.h. an einem vorderen Achsabschnitt, mit dem die Pedalachse voraus in den Hohlraum eingeführt wird und der, im eingebauten Zustand, dementsprechend entfernt von der Einführöffnung gelegen ist. Wenn an beiden Enden der im Pedalkörper eingeführten Pedalachse jeweils ein Lager angeordnet ist, kann die Pedalachse besonders gut gegen ein Verkippen gesichert werden. Dies ist ähnlich zu der oben erwähnten ersten Bauform von Pedalen, bei welcher eine längliche Pedalachse vorgesehen ist, die mittels einem oder mehreren Lagern gelagert ist. Dadurch können die Kräfte auf die gesamte Achslänge verteilt werden, wodurch die Größe der Lager reduziert werden kann. Genauer gesagt kann die Größe der Lager derart gewählt werden, dass deren Außenumfang geringer ist als die Dicke des Pedalkörpers (gemessen zwischen den beiden Standflächen des Pedals). Somit können die ein oder mehreren Lager im Pedalkörper integriert werden, ohne dass hierfür zusätzliche Erhebungen im Pedalkörper vorgesehen werden müssen. Das heißt, das Pedal kann jeweils durchgängig eben ausgestaltete Standflächen aufweisen. Die Pedalachse kann nach dem Einführen in den Pedalkörper gegen ein Herausfallen gesichert werden. Hierfür ist erfindungsgemäß ein Sicherungselement vorgesehen, das ausgestaltet ist, um das Lager auf der Pedalachse in einer, bezogen auf die Pedalachse, axialen Richtung abzustützen, sodass die Pedalachse gegen ein Herausfallen aus dem Pedalkörper gesichert ist. Das heißt, das Sicherungselement sichert das Lager und die im Lager gelagerte Pedalachse gegen eine axiale Bewegung (Hin- und Herbewegung) im Hohlraum des Pedalkörpers. Das Lager und die darin gelagerte Pedalachse sind also sozusagen mittels des Sicherungselements an einer bestimmten bzw. vordefinierten Position im Pedalkörper angeordnet und an dieser Stelle im Pedalkörper fixiert. Das Sicherungselement erstreckt sich von außen durch den Pedalkörper hindurch bis hin zum Lager, sodass das Sicherungselement von außen zugänglich ist. Das Sicherungselement kann also von außen zugänglich betätigt werden. Das Sicherungselement kann beispielsweise in eine Fixier-Position gebracht werden, in der es das Lager und die darin gelagerte Pedalachse, in der oben beschriebenen Art und Weise, im Hohlraum des Pedalkörpers fixiert. Diese Fixier-Position kommt zum Einsatz, wenn das Pedal vollständig montiert bzw. zusammengebaut ist, und am Fahrzeug (z.B. Fahrrad) befestigt wird. Das Sicherungselement kann aber natürlich auch aus dieser Fixier-Position gelöst werden, sodass die Fixierung des Lagers und der Pedalachse wieder gelöst wird und die Pedalachse innerhalb des Pedalkörpers wieder frei beweglich ist. Dies wäre denkbar, wenn das Pedal demontiert bzw. auseinandergebaut werden soll, um beispielsweise die Pedalachse und die ein oder mehreren Lager warten zu können. Da das Lager nicht in den Pedalkörper eingepresst ist, kann, nach dem Lösen des Sicherungselements, die Pedalachse vorteilhafter Weise mitsamt dem Lager aus dem Pedalkörper herausgezogen werden. Dies ermöglicht eine sehr einfache Wartung von Pedalachse und Lager, denn das Lager kann zerstörungsfrei von der Pedalachse abgezogen werden. Beim Einbau der Pedalachse ist es ausreichend, wenn das Lager auf die Achse gesteckt wird, und die Achse anschließend mitsamt dem Lager in den Pedalkörper eingeführt und mittels dem Sicherungselement fixiert wird. Es kann also auf ein umständliches Austreiben und Einpressen von Lagern aus bzw. in den Pedalkörper verzichtet werden.

Einige Ausführungsbeispiele sind exemplarisch in der Zeichnung dargestellt und werden nachstehend erläutert. Es zeigen:
- Fig. 1: eine schematische Perspektivansicht eines erfindungsgemäßen Pedals gemäß einem Ausführungsbeispiel,
- Fig. 2: eine schematische Draufsicht auf das erfindungsgemäße Pedal gemäß einem Ausführungsbeispiel,
- Fig. 3: eine schematische Schnittdarstellung entlang einer Schnittlinie A - A durch das in Figur 2 gezeigte Pedal,
- Fig. 4: einen vergrößerten Ausschnitt der Pedalachse aus Figur 3,
- Fig. 5: eine schematische Seitenansicht eines erfindungsgemäßen Pedals gemäß einem Ausführungsbeispiel,
- Fig. 6: eine schematische Schnittdarstellung entlang einer Schnittlinie C - C durch das in Figur 5 gezeigte Pedal,
- Fig. 7: eine schematische Schnittdarstellung entlang einer Schnittlinie B - B durch das in Figur 2 gezeigte Pedal,
- Fig. 8: eine schematische Frontalansicht auf die Vorderseite des Pedals gemäß einem Ausführungsbeispiel, und
- Fig. 9: eine schematische Frontalansicht auf die Rückseite des Pedals gemäß einem Ausführungsbeispiel.

Im Folgenden werden Ausführungsbeispiele mit Bezug auf die Figuren näher beschrieben, wobei Elemente mit derselben oder ähnlichen Funktion mit denselben Bezugszeichen versehen sind.

Das erfindungsgemäße Pedal wird am Beispiel eines Fahrradpedals beschrieben, insbesondere am Beispiel eines sogenannten Plattformpedals, das auch als Flat Pedal bezeichnet wird. Alle hierin gemachten Ausführungen gelten aber natürlich auch für andere Pedalformen, wie beispielsweise Click-Pedale. Zudem gilt die in diesem Dokument enthaltene Beschreibung für Pedale, unabhängig davon, an welchem Fahrzeug sie montiert sind. Beispielsweise betrifft die vorliegende Erfindung sowohl Pedale, die an unmotorisierten Fahrrädern montiert werden, als auch Pedale, die an motorisierten Fahrrädern, wie z.B. E-Bikes, Pedelecs und dergleichen montiert werden.

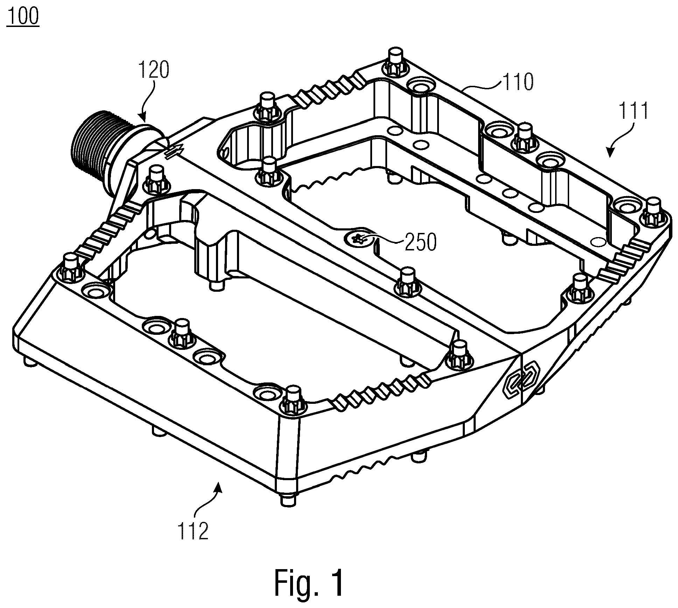

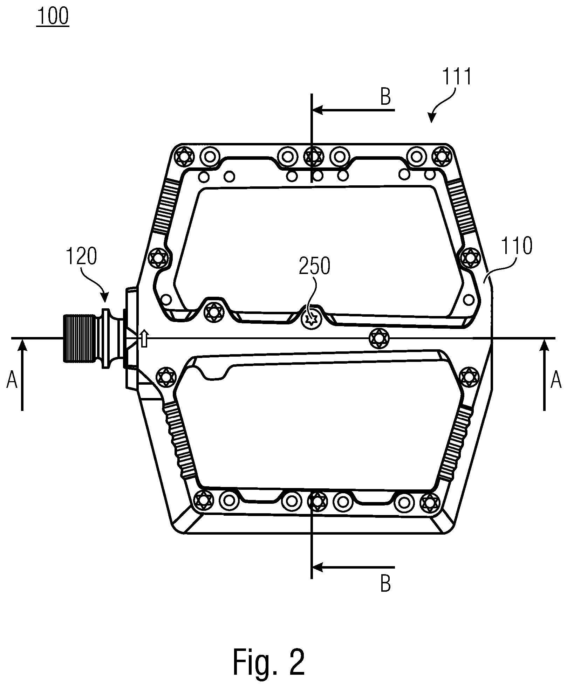

Figur 1 zeigt eine Perspektivansicht eines erfindungsgemäßen Pedals 100. Figur 2 zeigt eine Draufsicht auf dieses Pedal 100. Hierbei handelt es sich um ein Fahrradpedal, und insbesondere um ein sogenanntes Plattformpedal, das auch als Flat Pedal bezeichnet wird. Das Pedal 100 weist einen Pedalkörper 110 mit einer ersten Standfläche 111 und einer gegenüberliegenden zweiten Standfläche 112 auf. Der Fahrer steht während des Pedalierens mit seinem Schuh auf einer dieser Standflächen 111, 112.

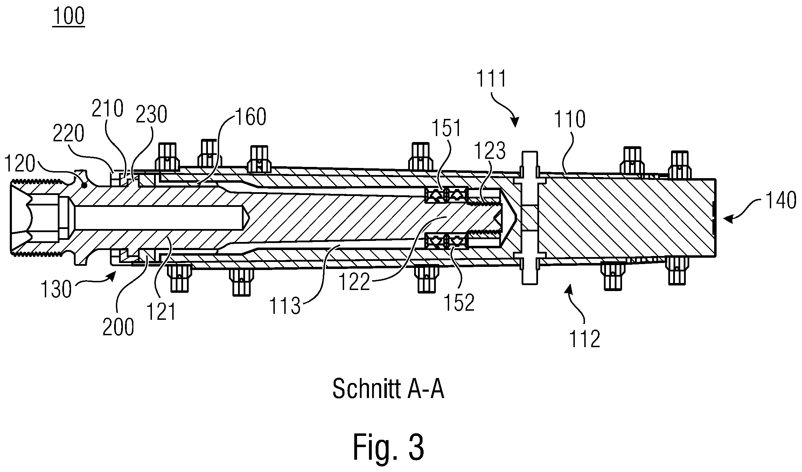

Das Pedal 100 weist außerdem eine Pedalachse 120 auf, die sich zumindest teilweise durch den Pedalkörper 110 hindurch erstreckt. Dies ist in der Schnittdarstellung in Figur 3 deutlicher erkennbar. Gezeigt ist ein Schnitt A - A durch das in Figur 2 abgebildete Pedal 100.

Der Pedalkörper 110 weist eine Einführöffnung 130 auf. Der Pedalkörper 110 weist außerdem einen Hohlraum 113 auf. Der Hohlraum 113 erstreckt sich, von der Einführöffnung 130 ausgehend, in den Pedalkörper 110 hinein. Wie hier beispielhaft abgebildet ist, kann sich der Hohlraum 113, von der Einführöffnung 130 ausgehend, bis etwa zur Hälfte des Pedals 100, oder bis zu 2/3 Pedals 100, oder bis zu 3/4 des Pedals 100 in den Pedalkörper 110 hinein bzw. durch den Pedalkörper 110 hindurch erstrecken. Der Hohlraum 113 erstreckt sich hierbei also nicht vollständig durch den gesamten Pedalkörper 110 hindurch. Somit weist der Pedalkörper 110 also lediglich eine einzelne einseitige Einführöffnung 130 auf, durch die die Pedalachse 120 ein Stück weit in den Pedalkörper 110 eingeführt werden kann. Der Pedalkörper 110 weist auf einer der Einführöffnung 130 gegenüberliegenden Seite 140 des Pedals 100 keine weitere Öffnung auf. Das heißt, der Pedalkörper 110 ist auf der der Einführöffnung 130 gegenüberliegenden Seite 140 geschlossen.

Die Pedalachse 120 kann durch die im Pedalkörper 110 vorgesehene Einführöffnung 130 in den Pedalkörper 110, beziehungsweise in den im Pedalkörper 110 ausgebildeten Hohlraum 113, eingeführt werden. Dabei erstreckt sich die Pedalachse 120 innerhalb des Hohlraums 113 zumindest abschnittsweise in den Pedalkörper 110 hinein bzw. durch den Pedalkörper 110 hindurch. Vorzugsweise erstreckt sich die Pedalachse 120 bis an das (der Einführöffnung 130 entfernt gelegene) Ende des Hohlraums 113. Anders ausgedrückt, kann sich die Pedalachse 120 weitestgehend vollständig durch den Hohlraum 113 hindurch erstrecken. Sofern sich der Hohlraum 113, wie oben beschrieben, nicht vollständig durch den Pedalkörper 110 hindurch erstreckt, erstreckt sich somit auch die im Hohlraum 113 angeordnete Pedalachse 120 nicht vollständig durch den Pedalkörper 110 hindurch. Das heißt, auch die Pedalachse 120 kann sich, von der Einführöffnung 130 ausgehend, bis etwa zur Hälfte des Pedals 100, oder bis zu 2/3 Pedals 100, oder bis zu 3/4 des Pedals 100 in den Pedalkörper 110 hinein bzw. durch den Pedalkörper 110 hindurch erstrecken. In anderen (hier nicht explizit dargestellten) Ausführungsformen kann sich die Pedalachse 120 nahezu vollständig durch den Pedalkörper 110 hindurch erstrecken, d.h. bis knapp zu der der Einführungsöffnung 130 gegenüberliegenden Seite 140 des Pedalkörpers 110. Selbiges gälte in diesem Falle natürlich auch für den Hohlraum 113.

Der Pedalkörper 110 ist drehbar auf der Pedalachse 120 gelagert. Dies kann beispielsweise mittels geeigneten Lagern, 151, 152, 160 realisiert werden. Hierbei handelt es sich insbesondere um Radiallager, die das Spiel der Pedalachse 120 in radialer Richtung beschränken.

Beispielsweise kann in einem hinteren Achsabschnitt 121, d.h. im Bereich nahe der Einführöffnung 130, ein erstes Radiallager 160, zum Beispiel in Form eines Gleitlagers, vorgesehen sein. Hierbei kann es sich um eine Gleitbuchse handeln, die um die Pedalachse 120 herum angeordnet ist. Denkbar wäre auch ein Kugellager.

Alternativ oder zusätzlich kann in einem vorderen Achsabschnitt 122, d.h. in einem von der Einführöffnung 130 entfernt gelegenen Abschnitt der Pedalachse 120, mindestens ein

Lager 151, insbesondere in Form eines Radiallagers, vorgesehen sein. Hierbei kann es sich beispielsweise um ein Kugellager, vorzugsweise um ein Rillenkugellager, handeln, das auf der Pedalachse 120 angeordnet ist. Wie in Figur 3 rein beispielhaft dargestellt ist, kann auch ein zweites Lager 152, z.B. ebenfalls in Form eines Kugellagers, auf der Pedalachse 120 angeordnet sein. Anstelle des ersten und/oder zweiten Kugellagers 151, 152 kann auch hier jeweils ein Gleitlager, zum Beispiel in Form einer Gleitbuchse, vorgesehen sein.

Nachfolgend wird lediglich das Lager 151 beschrieben. Alle Angaben gelten aber ebenso für das zweite Lager 152, oder für gegebenenfalls weitere, auf der Pedalachse 120 angeordnete Lager. Das Lager 151 kann von vorne auf die Pedalachse 120 geschoben werden. Hierfür kann die Pedalachse 120 im vorderen Achsabschnitt 122, bzw. an ihrer Spitze, einen reduzierten Durchmesser aufweisen, der kleiner ist als der Innendurchmesser des Lagers 151. Das Lager 151 kann somit über diesen Achsabschnitt 122 mit reduziertem Durchmesser auf die Pedalachse 120 aufgeschoben werden. Die Pedalachse 120 kann, in Richtung des hinteren Achsabschnitts 121, einen Achsabschnitt mit höherem Durchmesser aufweisen, wobei dieser höhere Durchmesser größer ist als der Innendurchmesser des Lagers 151. An dem Übergang vom kleineren zum größeren Durchmesser bildet sich eine Kante, die als Endanschlag für das auf die Pedalachse 120 aufgeschobene Lager 151 dient. Das Lager 151 kann an dieser Stelle also nicht mehr weiter nach hinten rutschen.

Am vorderen Achsabschnitt 122, bzw. an der Spitze der Pedalachse 120, kann die Pedalachse 120 ein Gewinde aufweisen. Eine Mutter 123 kann auf das Gewinde aufgeschraubt werden, um das Lager 151 auf der Pedalachse 120 zu fixieren. Das Lager 151 ist also durch die als Endanschlag dienende Kante gegen ein axiales Verrutschen in eine erste Richtung gesichert, und mittels der gegenüberliegend angeordneten Mutter ist das Lager 151 gegen ein axiales Verrutschen in eine entgegengesetzte zweite Richtung gesichert. Das Lager 151 kann zwischen der als Endanschlag dienenden Kante und der Mutter angeordnet sein.

Somit kann also das Lager 151 fest auf der Pedalachse 120 montiert sein. Ein wesentlicher Vorteil gegenüber dem Stand der Technik besteht nun darin, dass die fertig montierte Pedalachse 120, d.h. die Pedalachse 120 mitsamt dem darauf montierten Lager 151, als eine Einheit in den Pedalkörper 120 eingeführt bzw. aus dem Pedalkörper 120 herausgezogen werden kann. Das heißt, wenn die Pedalachse 120 aus dem Pedalkörper 110 herausgezogen wird, dann zieht man gleichzeitig auch das auf der Pedalachse 120 montierte Lager 151 mit heraus. Anschließend kann man die Mutter 123 lösen und das Lager 151 nach vorne, d.h. über die Spitze der Pedalachse 120, von der Pedalachse 120 abziehen.

Auch das Einführen der Pedalachse 120 in den Pedalkörper 110 gestaltet sich deutlich einfacher und leichter im Vergleich zum Stand der Technik. Die Pedalachse 120 mitsamt dem darauf montierten Lager 151 kann als eine Einheit in den Pedalkörper 110 eingeführt werden. Es entfällt also die Notwendigkeit, ein oder mehrere Lager in den Pedalkörper 110 einzupressen.

Vorzugsweise kann der Hohlraum 113 eine lichte Weite aufweisen, die geringfügig (z.B. um ein paar Zehntel Millimeter) größer ist als der Außenumfang bzw. der Außendurchmesser des Lagers 151. Dadurch kann zum Einen gewährleistet werden, dass sich die Pedalachse 120 mit dem darauf montierten Lager 151 als eine Einheit in den Hohlraum 113 des Pedalkörpers 110 einführen lässt. Zum Anderen kann, aufgrund des geringen Übermaßes der lichten Weite des Hohlraums 113 gegenüber dem Außendurchmesser des Lagers 151, garantiert werden, dass das Lager 151 in den Hohlraum 113 passt und sich die Pedalachse 120 somit geschmeidig in den Pedalkörper 110 einführen lässt, und dass sich das Lager 151 mit seinem Außenumfang an der Wandung des Hohlraums 113 abstützen kann, d.h. das Lager 151 kann passgenau bzw. spielfrei in den Hohlraum 113 eingeschoben werden. Somit besteht kein Spiel zwischen dem Lager 151 und der Wandung des Hohlraums 113, sodass die Pedalachse 120 passgenau in dem Pedalkörper 110 angeordnet ist und Radialkräfte durch das Lager 151 aufgenommen werden können.

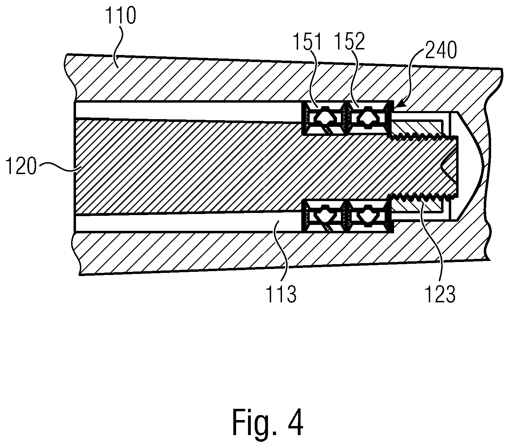

Wie in Figur 4 zu sehen ist, kann der Pedalkörper 110 an einem der Einführöffnung 130 gegenüberliegenden Ende des Hohlraums 113 einen, in den Hohlraum 113 hineinragenden Vorsprung 240 aufweisen. Das Lager 151 kann sich an diesem Vorsprung 240 in einer axialen Richtung abstützen. Der Vorsprung 240 kann als ein Endanschlag dienen, bis zu dem die Einheit aus Pedalachse 120 und darauf montiertem Lager 151 in den Pedalkörper 110 hineingeschoben werden kann. Der Vorsprung 240 kann, wie in Figur 4 gezeigt ist, umlaufend ausgebildet sein, sodass sich das Lager 151 vollumfänglich daran abstützen kann.

Zusammenfassend kann bis hierhin also zunächst festgehalten werden, dass mindestens ein Lager 151 auf der Pedalachse 120 montierbar ist, sodass dieses Lager 151 fest mit der Pedalachse 120 verbunden ist, wobei die Pedalachse 120 und das darauf montierte Lager 151 eine Einheit bilden. Diese Einheit aus Pedalachse 120 und Lager 151 kann dann durch die Einführöffnung 130 in den im Pedalkörper 110 ausgebildeten Hohlraum 113 eingeschoben werden. Der Hohlraum 113 kann sich unvollständig durch den Pedalkörper 110 erstrecken, d.h. der Hohlraum 113 restreckt sich nicht vollständig durch den kompletten Pedalkörper 110 hindurch. Die Einheit aus Pedalachse 120 und Lager 151 kann bis zu einem optional vorhandenen Vorsprung 240 in den Hohlraum 113 eingeführt werden. Dieser Vorsprung 240 stützt das Lager 151 in eine axiale Richtung ab, sodass die Pedalachse 120 nicht weiter axial in den Pedalkörper 110 eingeführt werden kann. Der Vorsprung 240 bildet also sozusagen einen Endanschlag für die Pedalachse 120.

In radialer Richtung stützt sich das Lager 151 mit seinem Außenumfang an der Wandung des Hohlraums 113, sprich innenseitig an dem Pedalkörper 110, ab. Die Pedalachse 120 ist somit in radialer Richtung fixiert und Radialkräfte können vom Lager 151 aufgenommen werden.

Um nun die eingeführte Pedalachse 120 gegen ein Herausfallen aus dem Pedalkörper 110 zu sichern, ist erfindungsgemäß ein Sicherungselement 250 vorgesehen. Das Sicherungselement 250 ist ausgestaltet, um das Lager 151 auf der Pedalachse 120 in einer, bezogen auf die Pedalachse 120, axialen Richtung abzustützen. Genauer gesagt verhindert das Sicherungselement 250 eine axiale Bewegung der Pedalachse 120 in Richtung der Einführöffnung 130, sodass die Pedalachse 120 nicht mehr in Richtung der Einführöffnung 130, und somit aus dem Pedalkörper 110 heraus, rutschen kann.

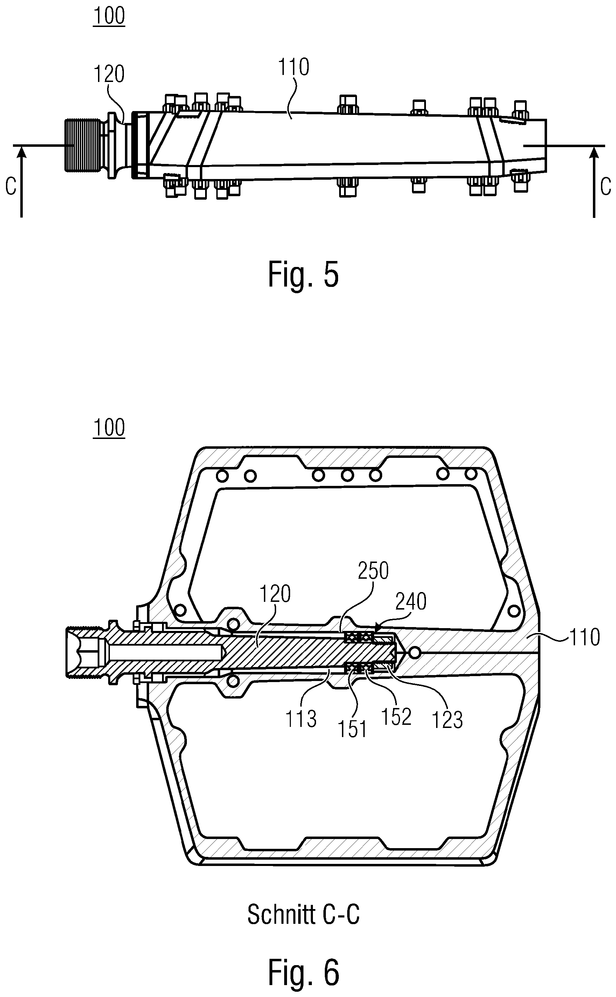

Zur näheren Beschreibung des erfindungsgemäßen Sicherungselements 250 sei auf die Figuren 5 und 6 verwiesen. Figur 5 zeigt eine Seitenansicht eines Pedals 100. Figur 6 zeigt eine Schnittdarstellung entlang der Schnittlinie C - C durch das in Figur 5 gezeigte Pedal 100.

Das Sicherungselement 250 erstreckt sich von außen durch den Pedalkörper 110 hindurch, in den Hohlraum 113 bis hin zum Lager 151, sodass das Sicherungselement 250 von außen zugänglich ist. Das Sicherungselement 250 ist direkt mit dem Lager 151 in physischem Kontakt. Hierbei kann das Sicherungselement 250 mit einer der Einführöffnung 130 zugewandten Oberfläche des Lagers 151 in Kontakt sein.

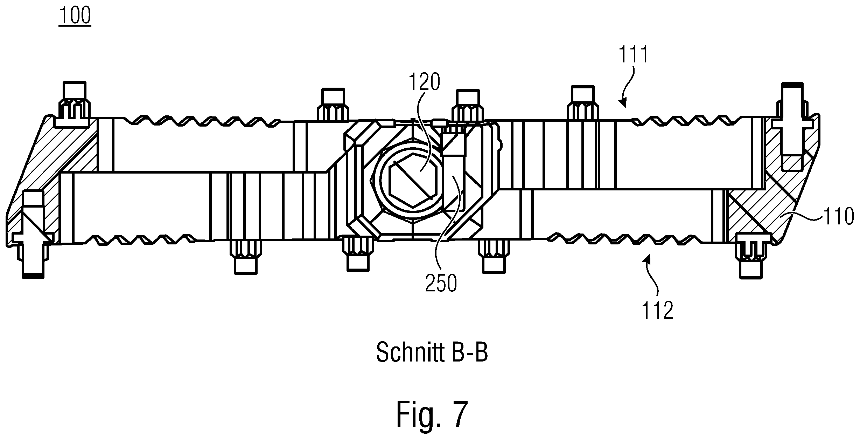

Wie in Figur 7 zu sehen ist, kann sich das Sicherungselement 250, bezogen auf die Pedalachse 120, in einer radialen Richtung durch den Pedalkörper 110 hindurch bis zu dem Lager 151 erstrecken. Beispielsweise kann sich also das Sicherungselement 250 im Wesentlichen senkrecht zur Standfläche 111 des Pedals 100 erstrecken, beziehungsweise senkrecht zur Standfläche 111 in den Pedalkörper 100 eingeführt sein.

Figur 7 zeigt eine Schnittdarstellung durch das in Figur 2 abgebildete Pedal 100 entlang einer Schnittlinie B - B. Die Schnittlinie B - B verläuft, von der Einführöffnung 130 aus gesehen, vor dem Lager 151, weshalb das Lager 151 in Figur 7 nicht zu erkennen ist. Es ist in Figur 7 jedoch deutlich zu erkennen, dass sich das Sicherungselement 250 senkrecht zur Standfläche 111 des Pedals 100 durch den Pedalkörper 110 erstreckt.

Unter erneuter Bezugnahme auf Figur 6 ist zu erkennen, dass sich das Lager 151 an dem, in den Hohlraum 113 hineinragenden, Sicherungselement 151 abstützt. Das Sicherungselement 250 übt hierbei eine, bezogen auf die Pedalachse 120, axial gerichtete Stützkraft auf das Lager 151 aus. Anders ausgedrückt, stützt sich das Lager 151 an dem senkrecht in den Hohlraum 113 hineinragenden Sicherungselement 250 ab, sodass die Einheit aus Pedalachse 120 und dem darauf montiertem Lager 151 gegen eine axiale Bewegung in Richtung der Einführöffnung 130 gesichert ist. Die Pedalachse 120 ist somit also im Pedalkörper 110 axial fixiert und kann nicht mehr aus dem Pedalkörper 110 herausrutschen.

Wie in den Figuren 1, 2 und 7 zu erkennen ist, kann das Sicherungselement 250 beispielsweise in Form einer Schraube ausgestaltet sein, die senkrecht in die Standfläche 111 des Pedalkörpers 110 eingeschraubt wird. Hierfür kann der Pedalkörper 110 eine entsprechende Gewindebohrung aufweisen. Diese Gewindebohrung ist an einer Position am Pedalkörper 110 vorgesehen, unter der sich das Lager 151 befindet. Genauer gesagt, befindet sich die Gewindebohrung kurz vor dem Lager 151, d.h. die Gewindebohrung ist nicht direkt über dem Lager 151 angeordnet, sondern leicht nach hinten, in Richtung der Einführöffnung 130, versetzt. Die Gewindebohrung, und somit auch das in die Gewindebohrung eingeschraubte Sicherungselement 250, können also, von der Einführöffnung 130 aus betrachtet, vor dem Lager 151 angeordnet sein. So kann das Sicherungselement 250 unmittelbar neben dem Lager 151 in den Hohlraum 113 eindringen und mit der lateralen Oberfläche bzw. Außenfläche des Lagers 151 in Kontakt kommen, sodass sich das Lager 151 an dem Sicherungselement 250 abstützen kann. Die Einheit aus Pedalachse 120 und Lager 151 ist dadurch gegen ein Herausrutschen aus dem Pedalkörper 110 gesichert.

Das Lager 151 kann entlang der Pedalachse 120 zwischen dem Sicherungselement 250 und dem Vorsprung 240 angeordnet sein. Das Lager 151 kann hierbei zwischen dem Sicherungselement 250 und dem Vorsprung 240 eingeklemmt sein, sodass das Lager 151 in axialer Richtung fixiert ist. Dadurch kann sich die Pedalachse 120 im Pedalkörper 110 nicht mehr hin und her, bzw. nicht mehr vor und zurück, bewegen. Der Vorsprung 240 sichert die Pedalachse 120 dabei gegen eine axiale Bewegung in eine erste axiale Richtung, und zwar in Richtung von der Einführöffnung 130 weg, d.h. in eine Einführrichtung, in der die Pedalachse 120 in den Pedalkörper 110 einführbar ist. Das Sicherungselement 250 hingegen sichert die Pedalachse 120 gegen eine axiale Bewegung in eine zur ersten axialen Richtung entgegengesetzte zweite axiale Richtung, und zwar in Richtung zu der Einführöffnung 130 hin, d.h. in eine Entnahmerichtung, in der die Pedalachse 120 aus dem Pedalkörper 110 entnommen werden kann.

Wie eingangs erwähnt wurde, kann die Pedalachse 120 mit dem darauf montierten Lager 151 eine Einheit bilden, sodass die Pedalachse 120 mitsamt dem Lager 151 in den Pedalkörper 110, bzw. in den im Pedalkörper 110 vorgesehenen Hohlraum 113, eingeführt bzw. von dort wieder herausgenommen werden kann. Dies bietet den Vorteil, dass im Vergleich zum Stand der Technik keine durchgängige Bohrung durch den kompletten Pedalkörper 110 hindurch vorgesehen werden muss, um austrittseitig, d.h. auf der der Einführöffnung 130 gegenüberliegenden Seite 140, ein Lager in den Pedalkörper 110 einpressen zu können. Wie gesagt, die erfindungsgemäße Pedalachse 120 und das darauf angeordnete Lager 151 bilden zusammen eine Montageeinheit. Das Lager 151 ist also auf der Pedalachse 120 montiert, während im Stand der Technik hingegen das Lager in den Pedalkörper 110 eingepresst wird, um die Pedalachse 120 anschließend durchzuführen.

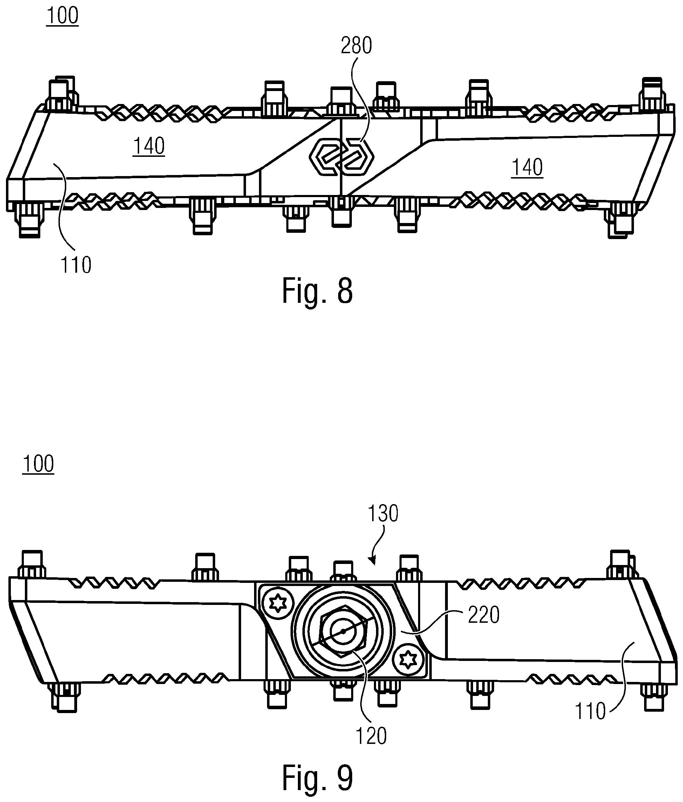

Figur 8 zeigt eine Frontalansicht auf die Vorderseite des Pedals 100, sprich auf die der Einführöffnung 130 gegenüberliegenden Seite 140 des Pedals 100, die im montierten Zustand dem Fahrzeug (z.B. Fahrrad) abgewandt ist. Hier ist zu erkennen, dass der Pedalkörper 110 auf dieser Vorderseite 140 geschlossen ist, d.h. eben gerade keine Öffnung aufweist, in die ein Lager eingepresst wird. Somit muss auch keine Öffnung mit einer zusätzlichen Staubschutzkappe abgedeckt werden, wie dies im Stand der Technik der Fall ist. Diese Staubschutzkappen können sich lösen, sodass dann zwangsläufig die Schutzwirkung nicht mehr gegeben ist, und Staub, Schmutz sowie Dreck und Feuchtigkeit in den Pedalkörper 110 eindringen können. Da beim erfindungsgemäßen Pedal 100 hingegen auf der Vorderseite 140 keine Öffnung und somit auch keine Staubschutzkappe nötig ist (d.h. das Pedal 100 ist auf der Vorderseite 140 geschlossen), kann ein deutlich besserer Schutz vor Staub, Schmutz und Feuchtigkeit gewährleistet werden.

Ein weiterer Vorteil besteht darin, dass das Pedal 100 mehr Vollmaterial aufweist und somit stabiler ist. Hinzu kommt, dass auf der geschlossenen Vorderseite 140 Platz ist, um beispielsweise ein Herstellerlogo 280 vorzusehen.

Figur 9 zeigt eine Frontalansicht auf die Rückseite des Pedals 100, sprich auf die Seite in der die Einführöffnung 130 vorgesehen ist, und welche im montierten Zustand dem Fahrzeug (z.B. Fahrrad) zugewandt ist. Ein Deckel 220 kann auf der Pedalachse 120 angeordnet sein, mittels dem die Einführöffnung 130 verschließbar ist. Der Deckel 220 bietet einen zusätzlichen Schutz vor eindringendem Schmutz, Staub und Feuchtigkeit. Der Deckel 220 kann beispielsweise an den Pedalkörper 110 angeschraubt werden.

Unter Bezugnahme auf Figur 3 ist zu erkennen, dass sich der Deckel 220 an einem umlaufenden Kragen 230 der Pedalachse 120 axial abstützen kann. Das heißt, der Deckel 220 stützt sich an dem umlaufenden Kragen 230 ab und sichert die Pedalachse 120 dadurch vor einem axialen Verrutschen entlang der Pedalachse 120. Beispielsweise kann der Deckel 220 dadurch die Pedalachse 120 davor bewahren, aus dem Pedalkörper 110 herauszurutschen.

Zwischen dem Deckel 220 und dem umlaufenden Kragen 230 kann, im Bereich der Einführöffnung 130, optional eine Wellenscheibe 210 vorgesehen sein. Die Wellenscheibe 210 kann eine L-Form aufweisen, sodass die Wellenscheibe 210 mit dem Kragen 230 zum Eingriff kommt. Die Wellenscheibe 210 kann sich an dem an der Pedalachse 120 ausgeformten Kragen 230 abstützen. Beim Anschrauben des Deckels 220 wird die Wellenscheibe 210 gegen den Kragen 230 gedrückt, um die Wellenscheibe 210 im steten Eingriff mit dem umlaufenden Kragen 230 der Pedalachse 120 zu halten. Die Wellenscheibe 210 übt dabei eine axiale Stützkraft auf die Pedalachse 120 aus und sichert dadurch die Pedalachse 120 vor dem Herausfallen aus dem Pedalkörper 110. Die Wellenscheibe 210 und der Deckel 220 können also gemeinsam dafür sorgen, dass die Pedalachse 120 vor einem Herausfallen aus dem Pedalkörper 110 gesichert ist. Dies bietet einen zusätzlichen Schutz, zusätzlich zu dem zuvor beschriebenen erfindungsgemäßen Sicherungselement 250. Die Wellenscheibe 210 kann daher auch als Sicherungsscheibe bezeichnet werden. Die Wellenscheibe 210 kann ferner verhindern, dass Schmutz, Staub und Feuchtigkeit in den Hohlraum 113 gelangen. Die Wellenscheibe 210 kann beispielsweise aus Filz bestehen.

Zwischen dem Gleitlager 160 und dem Kragen 230 kann optional eine weitere Wellenscheibe 200 angeordnet sein. Die Wellenscheibe 200 kann beispielsweise aus Filz bestehen. Die Wellenscheibe 200 kann eine Dichtwirkung erfüllen, um das Eindringen von Schmutz, Staub und Feuchtigkeit zu unterbinden. Diese Wellenscheibe 200 kann daher auch als Staubdichtung bezeichnet werden.

Die oben beschriebenen Ausführungsbeispiele stellen lediglich eine Veranschaulichung der Prinzipien des hierin beschriebenen innovativen Konzepts dar. Es versteht sich, dass Modifikationen und Variationen der hierin beschriebenen Anordnungen und Einzelheiten anderen Fachleuten einleuchten werden. Deshalb ist beabsichtigt, dass das hierin beschriebene Konzept lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Pedal (100) mit
einem Pedalkörper (110) mit einer Einführöffnung (130) und einem Hohlraum (113), der sich, von der Einführöffnung (130) ausgehend, in den Pedalkörper (110) hinein erstreckt,
wobei die Einführöffnung (130) als eine einzelne einseitige Öffnung in dem Pedalkörper (110) ausgestaltet ist, sodass der Pedalkörper (110) auf einer der Einführöffnung (130) gegenüberliegenden Seite (140) geschlossen ist und dort keine weitere Öffnung aufweist,
einer Pedalachse (120), die durch die Einführöffnung (130) in den Pedalkörper (110) eingeführt ist und sich entlang des Hohlraums (113) in den Pedalkörper (110) hinein erstreckt,
mindestens einem auf der Pedalachse (120) angeordneten Lager (151), das ausgestaltet ist, um den Pedalkörper (110) drehbar auf der Pedalachse (120) zu lagern, wobei das Lager (151) als ein Kugellager ausgestaltet ist,
wobei das Lager (151) auf der Pedalachse (120) montiert ist, sodass die Pedalachse (120) und das darauf montierte Lager (151) eine Montageeinheit bilden, die in den Pedalkörper (110) einschiebbar beziehungsweise aus dem Pedalkörper (110) entnehmbar ist, und
einem Sicherungselement (250), das ausgestaltet ist, um das Lager (151) auf der Pedalachse (120) in einer, bezogen auf die Pedalachse (120), axialen Richtung abzustützen, um die Pedalachse (120) gegen ein Herausfallen aus dem Pedalkörper (110) zu sichern,
wobei sich das Sicherungselement (250) von außen durch den Pedalkörper (110) hindurch in den Hohlraum (113) bis hin zum Lager (151) erstreckt, und wobei das Sicherungselement (250) von außen zugänglich ist.

2. Pedal (100) nach Anspruch 1,
wobei das Sicherungselement (250) direkt mit dem Lager (151) in physischem Kontakt ist.

3. Pedal (100) nach Anspruch 1 oder 2,
wobei das Sicherungselement (250) mit einer der Einführöffnung (130) zugewandten Oberfläche des Lagers (151) in Kontakt ist.

4. Pedal (100) nach einem der vorhergehenden Ansprüche,
wobei sich das Sicherungselement (250) in einer, bezogen auf die Pedalachse (120), radialen Richtung durch den Pedalkörper (110) hindurch bis zu dem Lager (151) erstreckt, und
wobei das Sicherungselement (250) eine, bezogen auf die Pedalachse (120), axial gerichtete Stützkraft auf das Lager (151) ausübt.

5. Pedal (100) nach einem der vorhergehenden Ansprüche,
wobei das Sicherungselement (250) in Form einer Schraube ausgestaltet ist, die senkrecht in eine Standfläche (111) des Pedalkörpers (110) eingeschraubt ist.

6. Pedal (100) nach einem der vorhergehenden Ansprüche,
wobei im Pedalkörper (110) ein sich in den Hohlraum (113) hinein erstreckender Vorsprung (240) ausgebildet ist, an dem sich das Lager (151) in einer axialen Richtung abstützt.

7. Pedal (100) nach Anspruch 6,
wobei der Vorsprung (240) umlaufend ausgebildet ist, sodass sich das Lager (151) vollumfänglich daran abstützt.

8. Pedal (100) nach Anspruch 6 oder 7,
wobei das Lager (151) entlang der Pedalachse (120) zwischen dem Sicherungselement (250) und dem Vorsprung (240) angeordnet ist.

9. Pedal (100) nach einem der vorhergehenden Ansprüche,
wobei das Sicherungselement (250), von der Einführöffnung (130) aus betrachtet, vor dem Lager (151) angeordnet ist.

10. Pedal (100) nach einem der vorhergehenden Ansprüche,
wobei die lichte Weite des Hohlraums (113) größer ist als der Außenumfang des Lagers (151).

11. Pedal (100) nach einem der vorhergehenden Ansprüche,
wobei sich der Hohlraum (113), von der Einführöffnung (130) ausgehend, nicht komplett durch den Pedalkörper (110) hindurch sondern lediglich um bis zur Hälfte des Pedals (100), oder um bis zu ¾ des Pedals (100), in den Pedalkörper (110) hinein erstreckt.

12. Pedal (100) nach einem der vorhergehenden Ansprüche,
ferner aufweisend eine Sicherungsscheibe (210), die mit einem an der Pedalachse (120) ausgeformten umlaufenden Kragen (230) zum Eingriff kommt, um die Pedalachse (120) in einer axialen Richtung abzustützen und gegen ein Herausfallen aus dem Pedalkörper (110) zu sichern.

13. Pedal (100) nach Anspruch 12,
ferner aufweisend einen Deckel (220), der an dem Pedalkörper (110) montiert ist und die Einführöffnung (130) abdeckt,
wobei der Deckel (220) mit der Sicherungsscheibe (210) in Kontakt ist, um die Sicherungsscheibe (210) im steten Eingriff mit dem umlaufenden Kragen (230) der Pedalachse (120) zu halten.

## Claims

1. A pedal (100) comprising:
a pedal body (110) having an insertion opening (130) and a cavity (113) which, starting from the insertion opening (130), extends into the pedal body (110),
wherein the insertion opening (130) is configured as a single one-sided opening in the pedal body (110) so that the pedal body (110) is closed on a side (140) opposite the insertion opening (130) and has no further opening there,
a pedal axle (120) which is inserted into the pedal body (110) through the insertion opening (130) and extends into the pedal body (110) along the cavity (113),
at least one bearing (151) arranged on the pedal axle (120), which is configured to support the pedal body (110) to be rotatable on the pedal axle (120), the bearing (151) being configured as a ball bearing,
wherein the bearing (151) is mounted on the pedal axle (120) so that the pedal axle (120) and the bearing (151) mounted thereon form a mounting unit which can be inserted into the pedal body (110) or removed from the pedal body (110), and
a securing element (250) which is configured to support the bearing (151) on the pedal axle (120) in an axial direction with respect to the pedal axle (120) in order to secure the pedal axle (120) against falling out from the pedal body (110),
wherein the securing element (250) extends from outside through the pedal body (110) into the cavity (113) to the bearing (151), and wherein the securing element (250) is accessible from outside.

2. The pedal (100) according to claim 1,
wherein the securing element (250) is in direct physical contact with the bearing (151).

3. The pedal (100) according to claim 1 or 2,
wherein the securing element (250) is in contact with a surface of the bearing (151) facing the insertion opening (130).

4. The pedal (100) according to any of the preceding claims,
wherein the securing element (250) extends in a radial direction with respect to the pedal axle (120) through the pedal body (110) to the bearing (151), and
wherein the securing element (250) exerts an, with respect to the pedal axle (120), axially directed supporting force on the bearing (151).

5. The pedal (100) according to any of the preceding claims,
wherein the securing element (250) is configured in the form of a screw which is screwed perpendicularly into a stepping surface (111) of the pedal body (110).

6. The pedal (100) according to any of the preceding claims,
wherein a projection (240) extending into the cavity (113) is formed in the pedal body (110) on which the bearing (151) is supported in an axial direction.

7. The pedal (100) according to claim 6,
wherein the projection (240) is formed to be circumferential so that the bearing (151) is supported thereon on its entire circumference.

8. The pedal (100) according to claim 6 or 7,
wherein the bearing (151) is arranged along the pedal axle (120) between the securing element (250) and the projection (240).

9. The pedal (100) according to any of the preceding claims,
wherein the securing element (250) is arranged in front of the bearing (151) as viewed from the insertion opening (130).

10. The pedal (100) according to any of the preceding claims,
wherein the clear width of the cavity (113) is larger than the outer circumference of the bearing (151).

11. The pedal (100) according to any of the preceding claims,
wherein the cavity (113), starting from the insertion opening (130), does not extend completely through the pedal body (110) but only by up to half of the pedal (100), or by up to 3/4 of the pedal (100), into the pedal body (110).

12. The pedal (100) according to any of the preceding claims,
further comprising a securing washer (210) which engages into a circumferential collar (230) formed on the pedal axle (120) in order to support the pedal axle (120) in an axial direction and to secure it against falling out from the pedal body (110).

13. The pedal (100) according to claim 12,
further comprising a cover (220) which is mounted on the pedal body (110) and covers the insertion opening (130),
wherein the cover (220) is in contact with the securing washer (210) to keep the securing washer (210) in constant engagement with the circumferential collar (230) of the pedal axle (120).

## Revendications

1. Pédale (100) comprenant :
un corps de pédale (110) avec une ouverture d'introduction (130) et une cavité (113) qui s'étend dans le corps de pédale (110) à partir de l'ouverture d'introduction (130),
l'ouverture d'introduction (130) étant réalisée sous la forme d'une ouverture unique unilatérale dans le corps de pédale (110), de sorte que le corps de pédale (110) est fermé du côté (140) opposé à l'ouverture d'introduction (130) et ne présente aucune autre ouverture audit endroit,
un axe de pédale (120) qui est inséré dans le corps de pédale (110) à travers l'ouverture d'introduction (130) et s'étend dans le corps de pédale (110) le long de la cavité (113),
au moins un palier (151) disposé sur l'axe de pédale (120), qui est conçu pour supporter le corps de pédale (110) de manière rotative sur l'axe de pédale (120), le palier (151) étant conçu comme un roulement à billes,
le palier (151) étant monté sur l'axe de pédale (120) de telle sorte que l'axe de pédale (120) et le palier (151) monté sur celui-ci forment une unité de montage qui peut être insérée dans le corps de pédale (110) ou retirée du corps de pédale (110), et
un élément de fixation (250) conçu pour soutenir le palier (151) sur l'axe de pédale (120) dans une direction axiale par rapport à l'axe de pédale (120) afin d'empêcher l'axe de pédale (120) de sortir du corps de pédale (110),
l'élément de sécurité (250) s'étendant depuis l'extérieur, à travers le corps de pédale (110), dans la cavité (113) jusqu'au palier (151), et étant accessible depuis l'extérieur.

2. Pédale (100) selon la revendication 1,
l'élément de fixation (250) étant en contact physique direct avec le palier (151).

3. Pédale (100) selon la revendication 1 ou 2,
l'élément de fixation (250) étant en contact avec une surface du palier (151) tournée vers l'ouverture d'introduction (130).

4. Pédale (100) selon l'une des revendications précédentes,
l'élément de fixation (250) s'étendant dans une direction radiale par rapport à l'axe de pédale (120) à travers le corps de pédale (110) jusqu'au palier (151), et
l'élément de fixation (250) exerçant, par rapport à l'axe de pédale (120), une force d'appui dirigée axialement sur le palier (151).

5. Pédale (100) selon l'une des revendications précédentes,
l'élément de fixation (250) étant conçu sous la forme d'une vis qui est vissée perpendiculairement dans une surface d'appui (111) du corps de pédale (110).

6. Pédale (100) selon l'une des revendications précédentes,
dans laquelle, dans le corps de pédale (110), est formée une saillie (240) s'étendant dans la cavité (113), sur laquelle le palier (151) s'appuie dans une direction axiale.

7. Pédale (100) selon la revendication 6,
la saillie (240) étant conçue de manière circonférentielle, de sorte que le palier (151) s'y appuie sur toute sa circonférence.

8. Pédale (100) selon la revendication 6 ou 7,
le palier (151) étant disposé le long de l'axe de pédale (120) entre l'élément de fixation (250) et la saillie (240).

9. Pédale (100) selon l'une des revendications précédentes,
l'élément de fixation (250) étant disposé devant le palier (151) vu depuis l'ouverture d'introduction (130).

10. Pédale (100) selon l'une des revendications précédentes,
la largeur intérieure libre de la cavité (113) étant supérieure à la circonférence extérieure du palier (151).

11. Pédale (100) selon l'une des revendications précédentes,
la cavité (113) ne s'étendant pas complètement, à partir de l'ouverture d'introduction (130), à travers le corps de pédale (110), mais ne s'étendant dans le corps de pédale (110) qu'au plus jusqu'à la moitié de la pédale (100) ou jusqu'aux trois quarts de la pédale (100).

12. Pédale (100) selon l'une des revendications précédentes,
comprenant en outre une rondelle de sécurité (210) qui est en prise avec une collerette périphérique (230) formée sur l'axe de pédale (120) afin d'appuyer l'axe de pédale (120) dans une direction axiale et d'empêcher sa sortie du corps de pédale (110).

13. Pédale (100) selon la revendication 12,
comprenant en outre un couvercle (220) monté sur le corps de pédale (110) et recouvrant l'ouverture d'introduction (130),
le couvercle (220) étant en contact avec la rondelle de sécurité (210) de manière à maintenir la rondelle de sécurité (210) en prise constante avec la collerette périphérique (230) de l'axe de pédale (120).
